# EUROPÄISCHE PATENTANMELDUNG

(11) **EP 2 006 650 A2**
(43) Veröffentlichungstag der Anmeldung: **24.12.2008**
(21) Anmeldenummer: 08104329.1
(22) Anmeldetag: 10.06.2008
(51) Int. Cl.: G01L 3/10

(54) **Magnetempfindliche Sensoranordnung**

(30) Priorität: 21.06.2007 DE 102007028481
(71) Anmelder: ROBERT BOSCH GMBH, 70442 Stuttgart (DE)
(72) Erfinder: Steinruecken, Heinrich, 71640 Ludwigsburg (DE); Noltemeyer, Ralf, 73249 Wernau (DE); Behrens, Holger, 71717 Beilstein (DE)

(57) **Zusammenfassung**

Es wird eine Sensoranordnung vorgeschlagen zur Ermittlung eines Drehmoments oder eines Differenzwinkels, umfassend zumindest ein Sensorelement (12, 60, 62), welches eine Magnetfeldinformation, insbesondere basierend auf der Verdrehung zumindest eines Fluxrings (14, 16) gegenüber einem Magnetpolrad (10), als Maß für das Drehmoment und/oder Differenzwinkel erfasst, wobei das Sensorelement (12, 60, 62) eine integrierte Schaltung aufweist, die die Magnetfeldinformation in eine entsprechende digitale Information umsetzt, die über ein digitales Übertragungsprotokoll an ein Steuergerät (70) übertragen wird, wobei das Sensorelement (12, 60, 62) zumindest eine Zusatzinformation (30, 32) zur Übertragung durch das digitale Übertragungsprotokoll zur Verfügung stellt.

## Beschreibung

### Stand der Technik

Die Erfindung geht aus von einer Sensoranordnung nach der Gattung des unabhängigen Anspruchs. Aus der DE 10 2005 031 086 A1 ist bereits eine Sensoranordnung zur Erfassung eines Differenzwinkels bekannt. Sie besteht aus mindestens einem magnetfeldempfindlichen Sensorelement, mit dem die Magnetfeldinformation eines Magnetkreises, bestehend aus einem Magnetpolrad und ferromagnetischen Fluxringen mit Zähnen, auswertbar ist.

Aus der DE 196 21 902 A1 ist ein System zur Überlagerung von Informationen bekannt. Dabei werden die einen Informationen durch ein gebildetes analoges Signal repräsentiert, wobei dieses Signal periodisch zwei vorgebbare Niveaus (High, Low) aufweist und die Informationen durch die Periodendauer des analogen Signals repräsentiert werden. Die vorgebbaren Niveaus des analogen Signals können dabei durch zwei unterschiedliche Strom- oder Spannungswerte realisiert sein. Die anderen Informationen liegen in Form eines gebildeten digitalen Signals vor, das Informationen in Form eines digitalen Datenworts repräsentiert. Zur Bildung eines Überlagerungssignals wird ein digitales Signal dem analogen Signal überlagert.

Bei Drehmomentsensoren nach Art der DE 10 2005 031 086 A1 werden bislang überwiegend Analogsignale an das Steuergerät übertragen. Zusätzliche Informationen, neben dem Messwert, können nicht übertragen werden. Es ist daher Aufgabe der vorliegenden Erfindung, für diese spezielle Anwendung nützliche Zusatzinformationen in einfacher Art und Weise mit zu übertragen. Diese Aufgabe wird gelöst durch die Merkmale des unabhängigen Anspruchs.

### Offenbarung der Erfindung

Die erfindungsgemäße Sensoranordnung zur Ermittlung eines Drehmoments oder eines Differenzwinkels umfasst zumindest ein Sensorelement, welches eine Magnetfeldinformation, insbesondere basierend auf der Verdrehung zumindest eines Fluxrings gegenüber einem Magnetpolrad, als Maß für das Drehmoment und/oder Differenzwinkel erfasst. Das Sensorelement weist eine integrierte Schaltung auf, die die Magnetfeldinformation in eine entsprechende digitale Information umsetzt, die über ein digitales Übertragungsprotokoll an ein Steuergerät übertragen wird. Das Sensorelement stellt dem Steuergerät zumindest eine Zusatzinformation zur Übertragung durch das digitale Übertragungsprotokoll zur Verfügung.

Die Sensoranordnung demgegenüber den Vorteil, dass dank der Zusatzinformation mögliche Fehler des Messsignals des Sensors durch ein Steuergerät kompensiert werden können. Als Zusatzinformationen eignen sich besonders Temperatur, Status- oder Produktionsdaten des Sensorelements. Damit lässt sich die Sensormechanik günstiger aufbauen, indem nun auch Komponenten wie beispielsweise Magnete mit geringerer Alterungsbeständigkeit oder größerem Temperaturgang eingesetzt werden können, da durch die Übertragung der Temperatur nun eine Kompensation des Messsignals möglich ist.

In einer zweckmäßigen Weiterbildung ist vorgesehen, dass ein Ausgangssignal eines Schaltmittels dem Sensorelement zugeführt ist als Zusatzinformation. Bei diesem Schaltmittel kann es sich beispielsweise um einen Umdrehungszähler einer Lenksäule handeln. Durch die Zuführung des Ausgangssignals zum Sensorelement sind weitere Leitungen oder Steckverbindungen unmittelbar zum Schaltmittel nicht erforderlich. Zweckmäßiger Weise ist das Schaltmittel Bestandteil der Platine des Sensorelements, was zur weiteren Integration beiträgt.

In einer zweckmäßigen Weiterbildung ist vorgesehen, dass die Zusatzinformation in dem Steuergerät zur Fehlerkompensation der vom Sensorelement erfassten Magnetfeldinformation verwendet ist. Dadurch können Sensorelemente eingesetzt werden, die zwar eine integrierte Schaltung aufweisen, jedoch keinen Mikrocontroller. Erfindungsgemäß wird zur Sensorsignalkompensation auf den Mikrocontroller des Steuergeräts zugegriffen, der dort ohnehin vorhanden ist.

In einer zweckmäßigen Weiterbildung weist das Sensorelement zumindest einen Speicher auf zur Speicherung der Zusatzinformation und/oder eine Temperaturerfassung zur Ermittlung der Temperatur als Zusatzinformation. Da die Daten nur im Sensorelement abgelegt sind, ist ein Austausch des Steuergeräts und/oder des Sensorelements während der Fahrzeuglebensdauer unproblematisch, da die entsprechenden Zusatzinformationen des Sensorelements wieder neu übertragen werden.

In einer zweckmäßigen Weiterbildung ist vorgesehen, dass über die zumindest eine Versorgungsspannungsleitung Magnetfeldinformation und/oder Zusatzinformation vom Sensorelement an das Steuergerät übertragen wird. Zur Übertragung der Zusatzinformation werden somit keine weiteren Leitungen oder Steckverbindungen benötigt.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Sensoranordnung ist in der Zeichnung dargestellt und wird nachfolgend näher beschrieben. Es zeigen:
die Figur 1 eine perspektivische Darstellung der wesentlichen Komponenten des Drehmomentsensors,
die Figur 2 eine perspektivische Darstellung des Drehmomentsensors in Verbindung mit den verschiedenen Wellen,
die Figur 3 eine schematische Übersicht über das verwendete Übertragungsprotokoll sowie
die Figur 4 ein Blockschaltbild der einzelnen Elemente der Sensoranordnung in Verbindung mit dem Steuergerät.

### Beschreibung der Ausführungsbeispiele

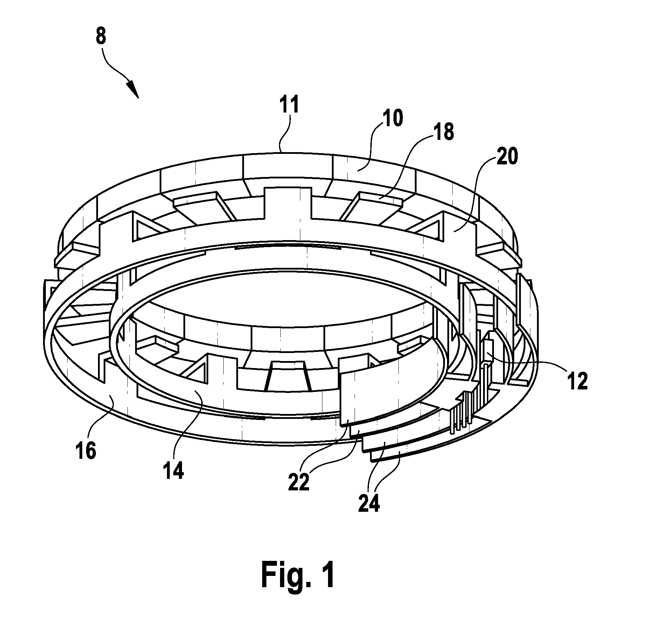

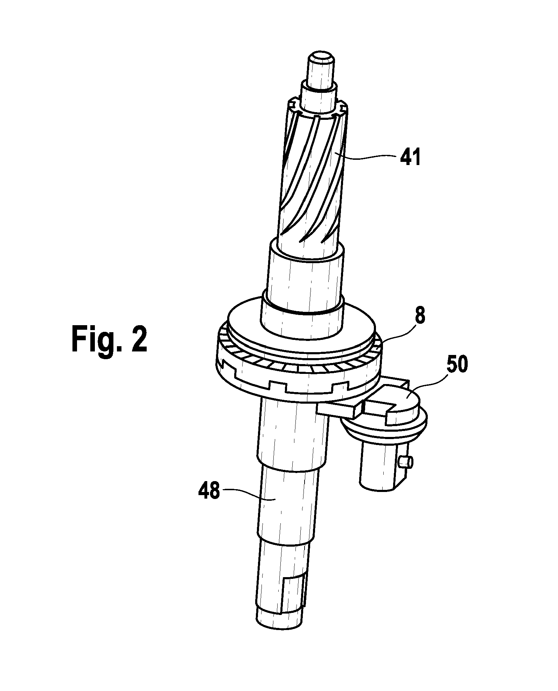

In Figur 1 sind die Komponenten einer Sensoranordnung 8 gezeigt. Ein Magnetpolrad 10 und ein den oberen Bereich des Magnetpolrads 10 überdeckendes Magnetfluss-Rückschlusselement 11 sind mit einer nicht dargestellten ersten Welle 41 verbunden. Eine zweite Welle 48, wie in Figur 2 beispielhaft gezeigt, steht mit einem ersten Fluxring 14 und einem zweiten Fluxring 16 in Verbindung. Der erste Fluxring 14 ist auf einem inneren Radius angeordnet und wird von einem zweiten Fluxring 16, der auf einem äußeren Radius angeordnet ist, umgeben. Ausgehend von dem ersten Fluxring 14 sind in regelmäßigen Abständen in Umfangsrichtung erste Zähne 18 ausgebildet, die sich in radialer Richtung vom Durchmesser des ersten Fluxringes 14 ausgehend nach außen hin erstrecken. Auch von dem zweiten Fluxring 16 gehen in regelmäßigen Abständen zweite Zähne 20 aus, die ebenfalls in radialer Richtung orientiert sind. Die zweiten Zähne 20 weisen den selben axialen Abstand zu dem Magnetpolrad 10 auf wie auch die ersten Zähne 18. Die Abstände zwischen den Zähnen 18, 20 sind so gewählt, dass erste Zähne 18 und zweite Zähne 20 ineinandergreifen. Der Abstand zwischen erstem Zahn 18 und benachbartem zweitem Zahn ist so gewählt, dass der im Wesentlichen mit der Geometrie des Magnetpolrads 10 übereinstimmt, d. h. beispielsweise mit dem Abstand von der Mitte eines Nordpolmagnetsegments zu der Mitte des benachbarten Südpolmagnetsegments. Zwischen erstem Fluxring 14 und zweitem Fluxring 16 ist zumindest ein Sensorelement 12, vorzugsweise jedoch zwei zur Erfassung des Magnetfelds angeordnet. In dem Bereich des Sensorelements 12 ist ein erstes Magnetfluss-Sammelelement 22 vorgesehen, bestehend aus erster Schale und zweiter Schale, die jeweils den ersten Fluxring 14 umschließen. Ein zweites Magnetfluss-Sammelelement 24 ist ebenfalls gleichlaufend zum zweiten Fluxring 16 angeordnet. Beide Magnetfluss-Sammelelemente 22, 24 sind kreissegmentförmig ausgebildet, d. h. im Wesentlichen ringförmig, wie in der Figur 1 gezeigt.

Zur Messung eines Drehmoments ist ein Torsionsstab auf der einen Seite mit dem Magnetpolrad 10 über einen Magnetpolhalter und der ersten Welle 41 verbunden. Auf der anderen Seite des Torsionsstabes wird ein Fluxringhalter mit den integrierten Fluxringen 14, 16 über die zweite Welle 48 verbunden. Eine entsprechende Anordnung ist in Figur 2 gezeigt, bei der die Sensoranordnung 8 mit einem Sensormodul versehen ist, in welchem die Sensorelemente 12 und Magnetfluss-Sammelelemente 22, 24 integriert sind.

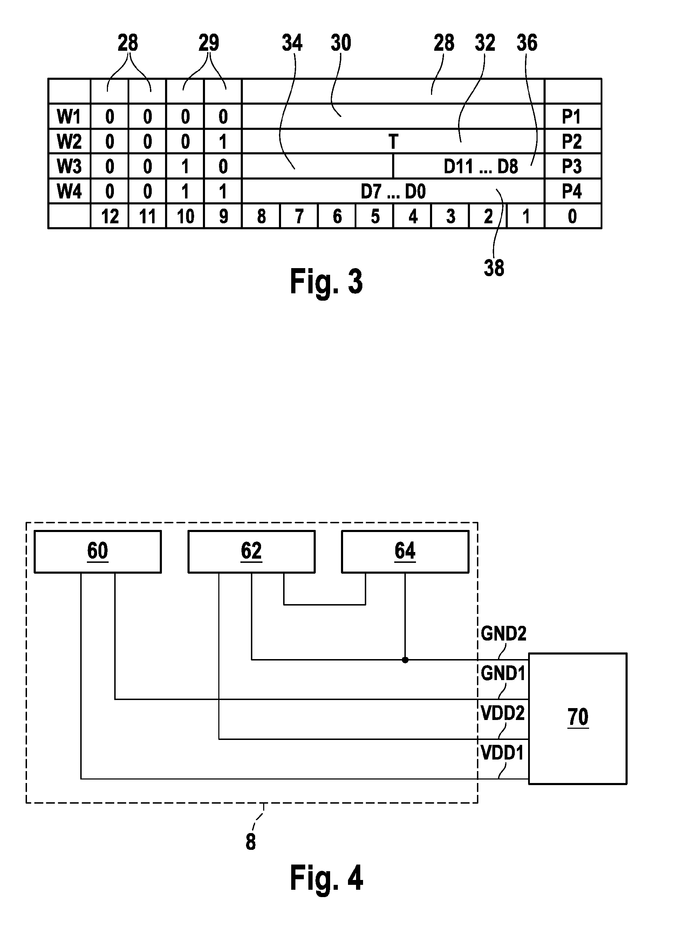

Gemäß Figur 3 ist der Aufbau eines digitalen Rahmens (frame) auf Basis des Übertragungsprotokolls PSI5 (Peripheral Sensor Interface) an dem in den Figuren 1 und 2 dargestellten Drehmomentsensor gezeigt. Er besteht aus vier Worten W1 bis W4, bestehend aus 13 Bits 0 bis 12. Durch zwei binäre Startfelder 28, nämlich Bit 11 und 12 der Worte W1 bis W4 wird der Start des jeweiligen Datenübertragungsvorgangs initialisiert. Zur Unterscheidung der Worte W1 bis W4 werden zwei binären Labelfelder 29, nämlich Bit 10 und 9 der Worte W1 bis W4 verwendet. Im ersten Wort W1, gekennzeichnet durch die Zustände der Label 29 durch jeweils Null, werden Statusinformationen 30 und eine Schaltinformation 30 betreffend den Zustand eines Schaltmittels 64, vorzugsweise ein Hall-Schalter, übertragen. Bei den zu übertragenden Daten 28 handelt es sich im gezeigten Fall um eine 8-Bit-Information. Im zweiten Wort W2 wird eine Temperaturinformation 32 übermittelt, und zwar über Bits 1 bis 8. Das zweite Wort W2 wird über einen bestimmten Zustand der Labels 30 indiziert, hier 0 und 1. In den Worten W3 und W4 wird die Drehmomentinformation in den Datenbits D0 bis D11 übertragen. Beispielhaft finden sich die ersten 8-Bit-Informationen im Wort W4 (D7 bis D0) in den Bits 1 bis 8, während die weitere 4-Bit-Information (D8 bis D11) als Bestandteil des dritten Worts W3 übertragen wird, beispielhaft in den Bits 1 bis 4. Der restliche Bestandteil des 4-Bit großen Datenfeldes des dritten Worts W3 ist der sogenannte "Message-Counter", also Befehlszähler. In Bit 0 des jeweiligen Worts W1 bis W4 wird die jeweilige Parity-Information P1 bis P4 übertragen.

Gemäß Figur 4 ist die Sensorarchitektur bei einer vierpoligen Schnittstelle (Interface) zu einem Steuergerät 70 gezeigt. Die Sensoranordnung 8 besteht hierbei aus einem ersten Sensorelement 60 und einem zweiten Sensorelement 62. Das erste Sensorelement 60 ist über eine erste Versorgungsleitung VDD1 und über eine erste Masseleitung GND1 mit dem Steuergerät 70 verbunden, während das zweite Sensorelement 62 über eine zweite Versorgungsleitung VDD2 und über eine zweite Masseleitung GND2 mit dem Steuergerät 70 kontaktiert ist. In der Sensoranordnung 8 befindet sich auch das Schaltelement 64, welches ebenfalls mit der zweiten Masseleitung GND2 kontaktiert ist. Die Schaltinformation des Schaltelements 64 wird innerhalb der Sensoranordnung 8 dem zweiten Sensorelement 62 zugeführt. Zur Datenübertragung werden die digitalen Informationen aufmoduliert auf die jeweiligen Versorgungsleitungen VDD1, VDD2. Pro Sensorelement 60, 62 kommt man mit einer Zwei-Draht-Schnittstelle aus (VDD1, GND1; VDD2, GND2).

Die in den Figuren 1 und 2 dargestellte Sensoranordnung 8 arbeitet wie folgt. Wird zwischen der ersten Welle 41 und der zweiten Welle 48 ein Drehmoment erzeugt, so tordiert der Torsionsstab. Dadurch entsteht eine Winkeldifferenz zwischen dem Magnetpolrad 10 und den Fluxringen 14, 16. Durch diese Winkeldifferenz wird eine magnetische Feldstärkeänderung im Bereich des Sensorelements 12 erzeugt, welche in ein vom Drehmoment abhängiges elektrisches Signal umgewandelt werden kann. Das Magnetfeld des Magnetpolrads 10 wird stirnseitig abgegriffen, indem die ersten und zweiten Zähne 18, 20 ineinandergreifen und im Wesentlichen auf dem selben Radius liegen wie die Magnete des Magnetpolrads 10. Die Magnetfluss-Sammelelemente 22, 24 sind gegenüber den Fluxringen 14, 16 ortsfest positioniert. Zwischen den Magnetfluss-Sammelelementen 22, 24 befinden sich die Sensorelemente 12, welche ebenfalls zwischen den Sammelelementen 22, 24 ortsfest platziert sind zur Messung der Variation der Magnetfeldstärke. Die ortsfest angeordneten Komponenten (Sensorelemente 12, Magnetfluss-Sammelelemente 22, 24) sind in dem Sensormodul 50 integriert. Ein geänderter Magnetfluss, erfasst durch die Sensorelemente 12, gibt Aufschluss über das an den Wellen 41, 48 auftretende Drehmoment.

Gemäß Figur 4 ist das Sensorelement 12 beispielhaft als erstes und zweites Sensorelement 60, 62 ausgeführt. Diese erfassen redundant entsprechende Magnetfeldinformation als Maß für das Drehmoment. Erstes und zweites Sensorelement 60, 62 sind als integrierte Schaltungen ausgeführt, die mehrere Funktionen übernehmen. Zum einen wird die über die Magnetfluss-Sammelelementen 22, 24 zugeführte Magnetfeldinformation in ein digitales Signal umgewandelt, gemäß Figur 3 nämlich in eine 12-Bit-Drehmomentinformation D0 bis D11. Weiterhin setzt die integrierte Schaltung der Sensorelemente 60, 62 zu übertragende Informationen in das gewünschte Übertragungsprotokoll, beispielsweise das PS15-Protokoll, um. Die integrierten Schaltungen als Bestandteile der Sensorelemente 60, 62 übermitteln weitere wichtige Zusatzinformationen 30, 32, welche dann in dem Steuergerät 70 ausgewertet werden können. So erfasst die integrierte Schaltung des jeweiligen Sensorelements 60, 62 auch die Temperatur, digitalisiert das Temperatursignal und setzt es in eine 8-Bit-Information um, die in dem zweiten Wort W2 entsprechend als jeweilige Temperaturinformation 32 mit übertragen wird. Dem Steuergerät 70 steht somit die Temperaturinformation 32 am jeweiligen Sensor 60, 62 zur Verfügung. Bei der Anordnung der Sensorelemente 60, 62 im Lenkungsgehäuse zur Erfassung des auf die Lenkung ausgeübten Drehmoments steht somit nun auch die Temperatur im Lenkungsgehäuse zur Verfügung. Mittels der Temperaturinformationen 32 können im Steuergerät 70 temperaturabhängige Effekte kompensiert werden. Diese Effekte müssen nicht ausschließlich die Sensoren 60, 62 betreffen, auch passive Komponenten in der Umgebung der Sensoren 60, 62 wie beispielsweise Lager- und Reibungsverhalten in Lagern können so kompensiert werden.

Mit jedem Start der integrierten Schaltung des jeweiligen Sensorelements 60, 62 werden auch definierte Produktionsdaten als Bestandteil der Statusinformationen 30 einmalig an das Steuergerät 70 übermittelt. Diese Produktionsdaten beschreiben den jeweiligen Sensor 60, 62 und werden bei der Kalibrierung des Sensors 60, 62 in dessen Speicher abgelegt. Durch diesen Vorgang steht dem Steuergerät 70 zusätzliche Information zum Abgleich und zur Verbesserung der Messwerte zur Verfügung, beispielsweise Parameter zum nichtlinearen Verhalten des Sensors 60, 62, Temperaturkoeffizienten oder ähnliches. Da die Daten nur im Sensorelement 60, 62 abgelegt werden, ist ein Austausch des Steuergeräts 70 und/oder Sensors 60, 62 während der Fahrzeuglebensdauer unproblematisch. Die Produktionsdaten können zusätzlich Chargenkennzeichnungen und das Produktionsdatum enthalten, welches mittels eines Analysetools ausgelesen werden kann.

Die Sensoranordnung 8 kann neben den Sensorelementen 60, 62 auch noch das Schaltelement 64 umfassen, welches beispielsweise als Umdrehungszähler an der Lenksäule eines Kraftfahrzeugs ausgeführt ist. Dieser Umdrehungszähler ist ein Zusatzbauelement auf der Platine der Sensorelemente 60, 62. Er könnte beispielsweise als Hall-Element ausgeführt sein, das mit einem auf einer Welle der Lenkung angeordneten Permanentmagneten zusammenwirkt. Das Ausgangssignal des Schaltelements 64 wird von der integrierten Schaltung des zweiten Sensorelements 62 eingelesen und als ein Bit im Protokoll übertragen, nämlich im Rahmen der Schaltinformation 30, die im ersten Wort W1 übertragen wird. Keine weitere Leitung und Steckverbindung zu diesem zusätzlichen Schaltelement 64 ist hierfür notwendig.

Die Sensoranordnung 8 eignet sich insbesondere für einen Drehmomentsensor für Lenkungen in Kraftfahrzeugen. Die beschriebene Anordnung ist insbesondere für komplexe Sensoren mit einer integrierten Schaltung interessant, welche aber keinen Mikrocontroller zur Kompensation der Fehler aufweisen. Diese Fehlerkompensation kann nun im Steuergerät 70 durchgeführt werden, da der Sensor 60, 62 nun auch Daten zur Verfügung stellt, die der Fehlerkompensation dienen wie beispielsweise Temperaturdaten und weitere sensorspezifische Produktionsdaten.

## Patentansprüche

1. Sensoranordnung zur Ermittlung eines Drehmoments oder eines Differenzwinkels,
umfassend zumindest ein Sensorelement (12, 60, 62), welches eine Magnetfeldinformation, insbesondere basierend auf der Verdrehung zumindest eines Fluxrings (14, 16) gegenüber einem Magnetpolrad (10), als Maß für das Drehmoment und/oder Differenzwinkel erfasst, wobei das Sensorelement (12, 60, 62) eine integrierte Schaltung aufweist, die die Magnetfeldinformation in eine entsprechende digitale Information umsetzt, die über ein digitales Übertragungsprotokoll an ein Steuergerät (70) übertragen wird, **dadurch gekennzeichnet, dass** das Sensorelement (12, 60, 62) zumindest eine Zusatzinformation (30, 32) zur Übertragung durch das digitale Übertragungsprotokoll zur Verfügung stellt.

2. Sensoranordnung nach Anspruch 1, **dadurch gekennzeichnet, dass** die Zusatzinformation Temperatur (32), Status- oder Produktionsdaten (30) des Sensorelements (60, 62) umfasst.

3. Sensoranordnung nach einem der vorhergehenden Ansprüche, **dadurch gekennzeichnet, dass** ein Ausgangssignal eines Schaltmittels (64) dem Sensorelement (62) zugeführt ist als Zusatzinformation (32).

4. Sensoranordnung zu einem der vorhergehenden Ansprüche, **dadurch gekennzeichnet, dass** die Zusatzinformation (30, 32) in dem Steuergerät (70) zur Fehlerkompensation der vom Sensorelement (60, 62) erfassten Magnetfeldinformation verwendet ist.

5. Sensoranordnung nach einem der vorhergehenden Ansprüche, **dadurch gekennzeichnet, dass** das digitale Übertragungsprotokoll mit einem Startfeld (28) beginnt, sich zumindest ein Labelfeld (29) anschließt und/oder ein Datenfeld zur Übertragung der Zusatzinformation (30, 32) und/oder Magnetfeldinformation.

6. Sensoranordnung nach einem der vorhergehenden Ansprüche, **dadurch gekennzeichnet, dass** das Sensorelement (12, 60, 62) zumindest einen Speicher aufweist zur Speicherung der Zusatzinformation (30).

7. Sensoranordnung nach einem der vorhergehenden Ansprüche, **dadurch gekennzeichnet, dass** das Sensorelement (12, 60, 62) zumindest eine Temperaturerfassung aufweist zur Ermittlung der Temperatur (32) als Zusatzinformation.

8. Sensoranordnung nach einem der vorhergehenden Ansprüche, **dadurch gekennzeichnet, dass** das Sensorelement (12, 60, 62) mit dem Steuergerät (70) über zumindest eine Versorgungsspannungsleitung (VDD1, GND1) verbunden ist.

9. Sensoranordnung nach einem der vorhergehenden Ansprüche, **dadurch gekennzeichnet, dass** über die zumindest eine Versorgungsspannungsleitung (VDD1, GND1) Magnetfeldinformation und/oder Zusatzinformation (30, 32) vom Sensorelement (12, 60, 62) an das Steuergerät (70) übertragen wird.

10. Sensoranordnung nach einem der vorhergehenden Ansprüche, **dadurch gekennzeichnet, dass** nach dem Start der integrierten Schaltung des Sensorelements (12, 60, 62) die Zusatzinformation (30), vorzugsweise Produktionsdaten des Sensorelements (12, 60, 62), an das Steuergerät (70) übertragen werden.
